# EUROPEAN PATENT APPLICATION

(11) **EP 3 287 964 A1**
(43) Date of publication of application: **28.02.2018**
(21) Application number: 16797445.0
(22) Date of filing: 25.07.2016
(51) Int. Cl.: G06Q 10/08, G06Q 30/04, G06Q 40/00, G06Q 30/06, G06Q 50/28

(54) **PURCHASE ASSISTANCE SYSTEM**

(30) Priority: 15.07.2016 JP 2016140143
(71) Applicant: ACD INC., Minato-ku, Tokyo 1050001 (JP)
(72) Inventor: NISHIURA, Ryutaro, Tokyo 105 0001 (JP)
(74) Representative: Chew, Kwan Chong Daniel
(86) International application number: PCT/JP2016/071695
(87) International publication number: WO 2018/012000

(57) **Abstract**

An object is to assist in executing business transactions giving consideration to delivery charges and tax amounts. In purchase assistance system (100), purchase assistance server (300) is provided with communications unit (320) that carries out communications with electronic business transaction server (200), which receives purchase instructions from user terminal (500); first storage unit (DB10) in which is stored merchandise information including a weight of each item of merchandise; second storage unit (DB23) in which is stored taxes imposable on merchandise; third storage unit (DB21) in which is stored a correspondence between weights and delivery charges; and provisioning unit (311) that, upon obtaining merchandise identifying information from the electronic business transaction server, provides to the electronic business transaction server via the communications unit identifying information of additional purchase merchandise corresponding to a delivery charge of the merchandise and a tax amount imposable on the merchandise among merchandise stored in the first storage unit.

## Description

### Technical Field

The present invention relates to purchasing and delivering merchandise using electronic business transactions.

### Background Art

Generally, in delivering merchandise that has been purchased by way of an electronic business transaction, a delivery charge is determined by performing classification according to a weight (gross weight) or size of the merchandise (or merchandise group). In consideration of this point, techniques are available for proposing merchandise to a user that is purchasable within a range not incurring an additional delivery charge.

### Citation List

### Patent Literature

Patent Literature 1: JP 2007-122581A

### Summary of Invention

### Technical Problem

In recent years, attention has been given to electronic business transactions that occur across nations, referred to as so called cross-border transactions. In these cases, depending on the nation of the delivery destination and the merchandise, tariffs corresponding to the merchandise are sometimes imposed along with other taxes. The techniques in Patent Document 1 are unable to propose merchandise factoring in taxes such as these.

An object of the present invention is to assist in executing business transactions giving consideration to delivery charges and tariffs.

### Solution to Problem

In one embodiment of the present invention, a purchase assistance server is provided having a communications unit that carries out communications with an electronic business transaction server, which receives purchase instructions from a user terminal, a first storage unit in which is stored merchandise information including a weight of each item of merchandise, a second storage unit in which is stored information relating to a tax that is imposable on distribution of merchandise, a third storage unit in which is stored a correspondence between weights and delivery charges, and a provisioning unit that, upon obtaining merchandise identifying information from the electronic business transaction server, provides to the electronic business transaction server via the communications unit identifying information of additional purchase merchandise corresponding to a delivery charge of the merchandise and a tax amount imposable on the merchandise among merchandise stored in the first storage unit.

In a preferred embodiment, a single delivery charge is associated with each weight classification of merchandise in the third storage unit, and the provisioning unit determines the additional purchase merchandise within a range in which an additional delivery charge is not incurred.

In a preferred embodiment, a single delivery charge is associated with each weight classification of merchandise in the third storage unit, and the provisioning unit determines the additional purchase merchandise so that any additional delivery charge incurred is minimized.

In a preferred embodiment, the merchandise information further includes a merchandise price, a single tax rate is associated with each price classification of merchandise in the second storage unit, and the provisioning unit determines the additional purchase merchandise within a range in which an additional tax is not incurred.

In a preferred embodiment, the merchandise information further includes a size of the relevant merchandise, and a single delivery charge is associated with each classification of packaging size of merchandise in the third storage unit.

In a preferred embodiment, a correspondence between weights and delivery charges is stored in the third storage unit in regard to multiple delivery agents, and the provisioning unit, in addition to the additional purchase merchandise, provides information that identifies one or more delivery agents included in the plurality of delivery agents.

In another aspect, a program is provided for executing a step of obtaining merchandise identifying information from an electronic business transaction server that receives purchase instructions from a user terminal, a step of referencing a storage unit in which is stored merchandise information including at least weights of merchandise weight, a tax imposable on merchandise, and a correspondence between weights and delivery charges, and determining additional purchase merchandise corresponding to a delivery charge of the merchandise and a tax amount imposable on the merchandise, and a step of providing the identifying information that has been determined to the electronic business transaction server.

In another aspect, a purchase assistance system is provided having a reception unit that receives purchase instructions from a user terminal, a first storage unit in which is stored merchandise information including at least weights of merchandise, a second storage unit in which is stored information relating to a tax that is imposable on distribution of merchandise, a third storage unit in which is stored a correspondence between weights and delivery charges, and a presentation unit that, upon obtaining merchandise identifying information from the electronic business transaction server, sends to the user terminal identifying information of additional purchase merchandise corresponding to a weight of the merchandise and a tax amount imposable on the merchandise.

### Advantageous Effects of Invention

According to the present invention, the execution of business transactions is assisted giving consideration to the taxes imposed on the merchandise and the delivery charges.

### Brief Description of Drawings

FIG. 1 is a schematic diagram of purchase assistance system 100.
FIG. 2 is a functional block diagram of EC server 200.
FIG. 3 is one example of data that is stored in database DB40.
FIG. 4 is a functional block diagram of purchase assistance server 300.
FIG. 5 is one example of data that is stored in database DB10.
FIG. 6 is one example of data that is stored in database DB30.
FIG. 7 is one example of data that is stored in database DB21.
FIG. 8 is one example of data that is stored in database DB23.
FIG. 9 is one example of a method of generating recommendation information in purchase assistance server 300.
FIG. 10 is one example of operations of purchase assistance system 100.
FIG. 11 is one example of a screen to be displayed on user terminal 500 at a time of merchandise selection.
FIG. 12 is one example of a screen to be displayed on user terminal 500 at a time of provisional determination of merchandise.
FIG. 13 is one example of a screen to be displayed on user terminal 500 prior to confirmation of merchandise to be purchased.
FIG. 14 is one example of a screen to be displayed on user terminal 500 prior to confirmation of merchandise to be purchased.
FIG. 15 is one example of a screen to be displayed on user terminal 500 at a time of confirming purchase of merchandise.

### Reference Signs List

100 ... Purchase assistance system, 200 ... EC server, 300 ... Purchase assistance server, 400 ... Warehouse terminal, 500 ... User terminal, 803 ... Second network, 802 ... First network, 600 ... Delivery agent server, 320 ... Communications unit, 310 ... Data processing unit, 311 ... Information generating unit, 312 ... Form generating unit, 313 ... Shipping instruction unit, 330 ... Storage unit, 210 ... Transaction execution unit, 220 ... Storage unit, 211 ... Payment processing unit, 212 ... Delivery processing unit, 240 ... Display control unit, 230 ... Communications unit.

### Description of Embodiments

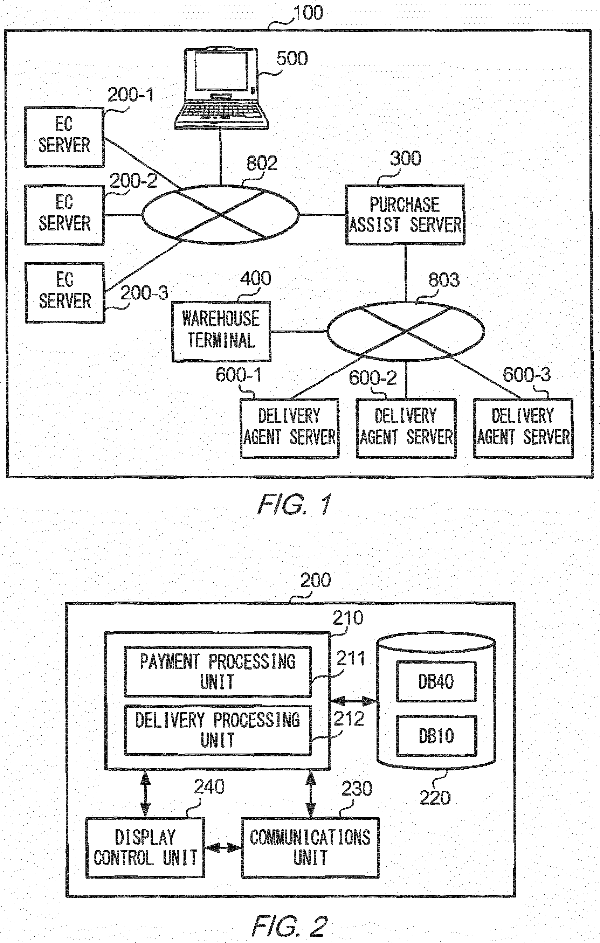

FIG. 1 shows an outline of purchase assistance system 100. Preferably, purchase assistance system 100 is a system for enabling distribution of merchandise across two economic regions (these being nations or other regions in which customs processing is necessary in the event of an inflow of merchandise from another region). Specifically, it is a system for enabling a user operating user terminal 500 (a purchaser of merchandise, hereinafter referred to simply as a user) to use a site, which is configured according to EC server 200 and managed by a corporation established within a nation X (for example, Japan), to purchase merchandise, and for that merchandise to be sourced from warehouse terminal 400 (for example, this is owned by a delivery agent) within the nation X and delivered to a delivery address within a nation A (for example, China). In this event, the merchandise passes through customs of the nation A (not shown in the diagram).

Specifically, purchase assistance system 100 includes user terminal 500, various EC servers 200 (EC server 200-1, EC server 200-2, and EC server 200-3), purchase assistance server 300, warehouse terminal 400, and various delivery agent servers 600 (delivery agent server 600-1, delivery agent server 600-2, and delivery agent server 600-3). Each of the EC servers 200 is connected via first network 802 to user terminal 500 and purchase assistance server 300. Purchase assistance server 300 is connected via second network 803 to warehouse terminal 400 and delivery agent servers 600 (delivery agent server 600-1, delivery agent server 600-2, and delivery agent server 600-3). First network 802 is an internet for example, and second network 803 is a VPN (virtual private network) for example. It should be noted that it is also possible for first network 802 and second network 803 to be the same network. Furthermore, the number of EC servers 200 and the number of delivery agent servers 600 shown in this diagram are merely illustrative examples. Furthermore, only a single user terminal 500 is shown to facilitate description, but in reality many of these would be present.

User terminal 500 is an ordinary information processing device having a communications function such as a personal computer, a smartphone or a mobile telephone, and is operated by the user. User terminal 500 connects to EC server 200 to execute an electronic business transaction. Electronic business transactions include providing assignment (such as purchasing, lending or the like) of merchandise (tangible objects) and a delivery service for the merchandise that has been purchased or the like. Specifically, user terminal 500 has functions by which it accesses EC server 200, displays a website configured by EC server 200, and sends to EC server 200 instructions for the purchase and delivery of merchandise based on instructions inputted by the user.

The various delivery agent servers 600 are managed by a single delivery agent and deliver the merchandise purchased by the user to an address specified by the user according to instructions from purchase assistance server 300. Specifically, the delivery agent sends a delivery personnel or delivery vehicle to warehouse terminal 400, collects the merchandise that has been packed by warehouse terminal 400, and performs delivery using a transportation means such as a vehicle, ship or airplane. A particular delivery charge system is set up by each of the delivery agents.

Warehouse terminal 400 is installed in a warehouse in which all the merchandise handled by purchase assistance system 100 is stored, and manages the warehousing of all merchandise. Specifically, based on instructions from purchase assistance server 300, a worker of warehouse terminal 400 or a task robot or the like installed in warehouse terminal 400 carries out extraction and packaging of the merchandise. It should be noted that there may be multiple warehouse terminals 400. For example, warehouses may be established according to the type of merchandise being handled or the manufacturer of the merchandise. In this case, purchase assistance server 300 selects a single warehouse terminal 400 from the multiple warehouse terminals 400 and gives instructions for the extraction and packaging of the merchandise. The warehouses may be dispersed across multiple nations in this case.

FIG. 2 shows functions of EC server 200. EC server 200 is managed by an enterprise that operates an EC (E-commerce) site. EC server 200 includes transaction execution unit 210, storage unit 220, communications unit 230, and display control unit 240.

Storage unit 220 is a storage device such as a hard disk or a semiconductor memory or the like, and in addition to an operating system (OS) it stores a program that, when executed by a processor, achieves functions in EC server 200 that are described later. Also stored in storage unit 220 is database DB40 in which is stored user information obtained from user terminals 500 (information such as login IDs, passwords, user IDs, addresses, names and the like, as well as payment information such as credit card numbers and the like, and other information obtained in advance from the user for utilizing the EC site).

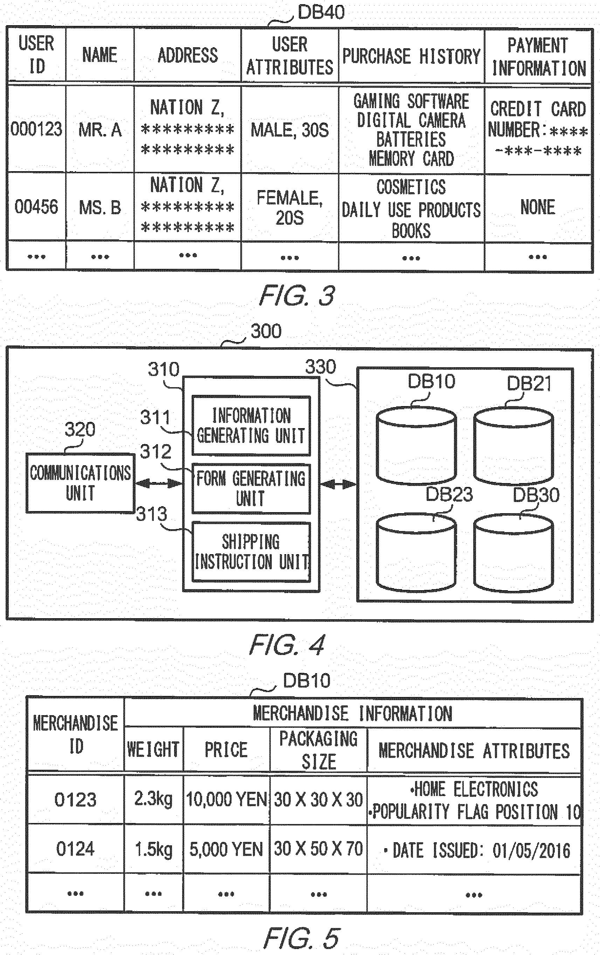

FIG. 3 is one example of data that is stored in database DB40. User names, user attributes, purchase history, and payment information are stored in database DB40 associated with user IDs that uniquely specify each user. Of this information, the name and address of the user required for specifying the ship-from address are sent to purchase assistance server 300 as necessary. Information relating to the user's purchasing activities such as user attributes and purchase history are supplied to purchase assistance server 300 as appropriate to be used in executing a proposal of additional merchandise to be described later (generating recommendation information).

Returning to FIG. 2, storage unit 220 accommodates database DB10 in which is stored information concerning all merchandise handled by EC server 200 (hereinafter price, weight, size, and merchandise attributes and the like are referred to as merchandise information). Database DB10 is also installed in purchase assistance server 300. When database DB10 is updated, the updated content is sent to purchase assistance server 300 so that purchase assistance server 300 can control the merchandise information handled by all EC servers 200. Details of databases DB10 are described later. Furthermore, order data generated by delivery processing unit 212 when a business transaction has been established is stored in storage unit 220. EC server 200 executes payment processing and the like based on the order data and updates the purchase history and the like in database DB10.

Display control unit 240 is implemented as a processor and generates content to be displayed on the website in response to requests from user terminal 500. Specifically, when a search keyword for merchandise is received from user terminal 500, the information of the relevant merchandise is extracted from database DB10 inside storage unit 220 and provided to user terminal 500. Additionally, display control unit 240 generates content to be displayed on the site based on recommendation information supplied from purchase assistance server 300.

Communications unit 230 is implemented as a communications interface for the carrying out of exchanges of information among purchase assistance server 300, user terminal 500, and a credit management server (not shown). Specifically, communications unit 230 provides the content generated by display control unit 240 to user terminal 500 in response to requests from the user. Furthermore, upon receiving from user terminal 500 instructions including the merchandise to be purchased and a delivery destination, communications unit 230 supplies this to transaction execution unit 210. Furthermore, communications unit 230 sends order data and provisional order data generated by delivery processing unit 212 to purchase assistance server 300.

Transaction execution unit 210 is implemented as a processor and processes the information relating to business transactions. Transaction execution unit 210 includes payment processing unit 211 and delivery processing unit 212. Payment processing unit 211 references storage unit 220 to carry out payment processing pertaining to the merchandise purchase. Specifically, it connects to an unshown payment server using information stored in storage unit 220 and carries out a process of withdrawing payment (for the cost of the merchandise, delivery charges, taxes, and other commissions or the like to be paid as necessary to EC server 200 or purchase assistance server 300) from the user's account.

Upon receiving an order confirmation instruction from user terminal 500, delivery processing unit 212 extracts the required information from database DB10 and database DB40 and generates order data indicating transaction completion. Additionally, upon receiving a provisional order instruction including information of the merchandise to be purchased and the delivery address from user terminal 500 prior to the order confirmation instruction, delivery processing unit 212 generates provisional order data.

FIG. 4 is a functional block diagram of purchase assistance server 300. Purchase assistance server 300 includes data processing unit 310, communications unit 320, and storage unit 330. Storage unit 330 is a storage device such as a hard disk or a semiconductor memory or the like, and in addition to a program that, when executed by a processor, achieves functions in 300 that are described later, it accommodates databases DB10, DB30, DB21, and DB23.

FIG. 5 is one example of data that is stored in database DB10. Database DB10 stores weight, price, packaging size, and merchandise attributes of the merchandise associated with a single merchandise ID that specifies each item of merchandise.

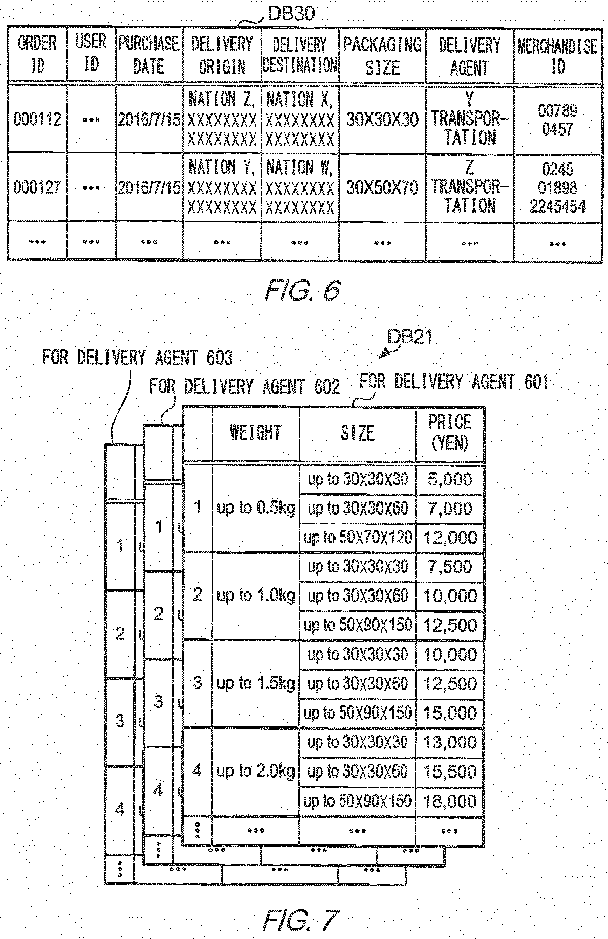

FIG. 6 is one example of data that is stored in database DB30. Database DB30 stores user IDs, purchase times, delivery origins, delivery destinations, packaging sizes, delivery agents, and merchandise IDs associated with a single order ID that specifies a single business transaction. That is, a single order ID signifies that a one-time delivery is to be executed to a single address.

FIG. 7 is one example of data that is stored in database DB21. Database DB21 is a table in which is listed a correspondence between weight and delivery charge for each delivery agent. Specifically, in database DB21, single delivery charges are associated with each weight classification of the merchandise, and moreover in a single weight classification, a single delivery charge is associated for each classification of packaging of merchandise.

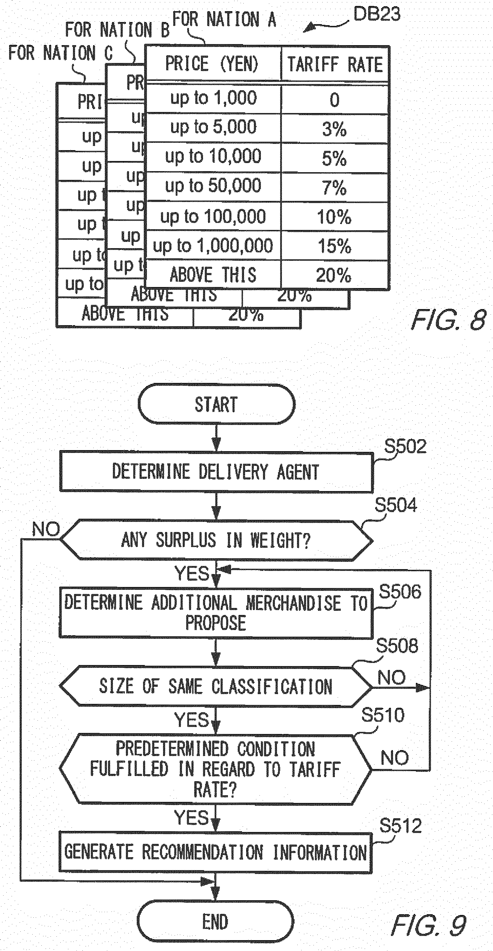

FIG. 8 is one example of data that is stored in database DB23. Database DB23 stores information relating to taxes imposable on the distribution of merchandise to a relevant nation for each nation that is a delivery destination. Here, an example is shown of a tax that is a tariff to be determined for each price classification of merchandise.

Furthermore, information concerning the stored merchandise handled by purchase assistance system 100 may also be stored in storage unit 330. For example, in a case where there are multiple warehouse terminals 400 in purchase assistance system 100, purchase assistance server 300 stores information for determining to which warehouse terminal 400 the extraction and packaging of merchandise is to be entrusted.

Communications unit 320 is equipped as a communications interface such as a LAN module and carries out communications among EC servers 200, warehouse terminals 400, and each delivery agent server 600. Specifically, upon obtaining order data and provisional order data from EC server 200, communications unit 320 provides this to data processing unit 310. Furthermore, communications unit 320 sends to EC server 200 recommendation information generated by information generating unit 311. Furthermore, communications unit 320 sends to delivery agent server 600 delivery form data generated by form generating unit 312. Furthermore, communications unit 320 sends to warehouse terminal 400 shipping instructions generated by shipping instruction unit 313.

Data processing unit 310 is implemented as one or more processors and includes information generating unit 311, form generating unit 312, and shipping instruction unit 313. Upon obtaining a merchandise ID from user terminal 500, information generating unit 311 provides to EC server 200 via data processing unit 310, from among merchandise registered in the database DB10, recommendation information including at least a merchandise ID of merchandise corresponding to the delivery charge of that merchandise and a tax imposable on the distribution of that merchandise to a delivery destination nation. That is, recommendation information is information indicating merchandise to be proposed for additional purchase. For example, information generating unit 311 determines additional purchase merchandise within a range in which an additional delivery charge is not incurred. Alternatively, it may determine the additional purchase merchandise so that the additional delivery charge incurred is minimized. Alternatively, it may determine the additional purchase merchandise within a range in which an additional tax is not incurred. Preferably, in addition to the additional purchase merchandise, it provides information that identifies one or more delivery agents included in the plurality of delivery agents.

Form generating unit 312 generates delivery form data based on the order data so as to match a format specified by delivery agent server 600 specified in the order data. Included in the delivery form data are at least a name and address of the user (that is, the delivery origin) and a name and address of the delivery destination. The delivery form data that is generated is sent to the relevant delivery agent server 600. Shipping instruction unit 313 sends to warehouse terminal 400 shipping instructions of the merchandise based on the order data.

FIG. 9 shows one example of a method of generating recommendation information in information generating unit 311. First, a single delivery agent is determined who is to be used in delivering the merchandise group (S502). Specifically, database DB10 is referenced to determine a weight of the merchandise (group) included in the provisional order data (a total weight in a case where there are multiple items of merchandise present in a single order) and a size when the relevant merchandise (group) is packaged. Then, database DB40 is referenced to specify a single delivery agent who has set the cheapest price in regard to the weight and packaged size.

Then, a determination is performed as to whether or not there is still surplus in the delivery weight (S502). Specifically, database DB40 is referenced to specify the weight classification pertaining to the calculated weight in the charge system stipulated by the determined delivery agent, and a gap is determined between the upper limit weight of that classification and the merchandise weight (that is, how much remaining weight of merchandise can be combined for delivery without incurring an additional delivery charge). If this gap is a predetermined value or greater, than a determination is made that there is a surplus, and if it is less than the predetermined value, a determination is made that there is no surplus. In a case where it is determined that there is no surplus, the procedure finishes without any proposal of additional merchandise.

In a case where a determination is made that there is a surplus, a determination is performed of additional merchandise to be proposed (S506). Specifically, a determination is performed of one or more items of merchandise having a weight within a range of the above-mentioned gap. This determination is carried out for example based on user information contained in the provisional order data. For example, one or more items of merchandise are selected from among a merchandise group pertaining to a same classification as the classification of merchandise for which there is the most number of purchases from the user's purchase history. Alternatively, information other than user information (information of strong-selling merchandise or the like) may be stored in purchase assistance server 300 and the determination of the merchandise may be performed using this information.

Then, a determination is performed (S508) of the size in a case in which the merchandise (group) specified in the provisional order data and the merchandise determined at S506 are combined and packaged. Here, in a case where multiple items of merchandise are packaged, the overall shape and size after packaging depends on the method of packaging (the placement of the merchandise group). Using a predetermined algorithm stored in storage unit 330, information generating unit 311 specifies a single most logical packaging method while combining the sizes of the items of merchandise. For example, the items of merchandise are placed so as to be closest to the ratio of length, width, and height of the packaging box (generally rectangular) stipulated in database DB21. In a case where the classification of the determined size is not identical to the classification of the merchandise (group) specified by the provisional order data (that is, an additional delivery charge is produced), the procedure returns to S506, the additional proposed merchandise is changed, and the procedure returns to the step of S508 again.

In a case where, at S508, an additional delivery charge does not occur from the perspective of weight and size even after combining the additional proposed merchandise for delivery, a determination is performed as to whether or not a condition relating to tax is fulfilled. Specifically, database DB23 is referenced and a determination is performed (S510) as to whether or not an imposable tariff rate fulfills a predetermined condition in a case where additional merchandise is combined for delivery to the specified delivery destination. Here, the predetermined condition refers to a condition in which, for example, in a case where the tariff to be imposed on the main unit price of the current merchandise (group) as a tax in the nation A is a tariff rate to be imposed that is identical or less than the tariff rate of the current merchandise group. For example, if a tariff of 3% is imposable on the additional proposed merchandise in a case where the tariff rate to be applied to the first merchandise group is 5%, it is determined that the predetermined condition is fulfilled.

Alternatively, this may be set so that the predetermined condition is that an additional tariff does not occur. For example, in a case where additional proposed merchandise pertains to a classification exempt from tariffs in a case where tariffs are determined in the nation of the delivery destination according to the classification (type) of product, it is determined that the predetermined condition is fulfilled.

Recommendation information is generated (S512) in a case where the additional proposed merchandise fulfills the predetermined condition in regard to tariff rates.

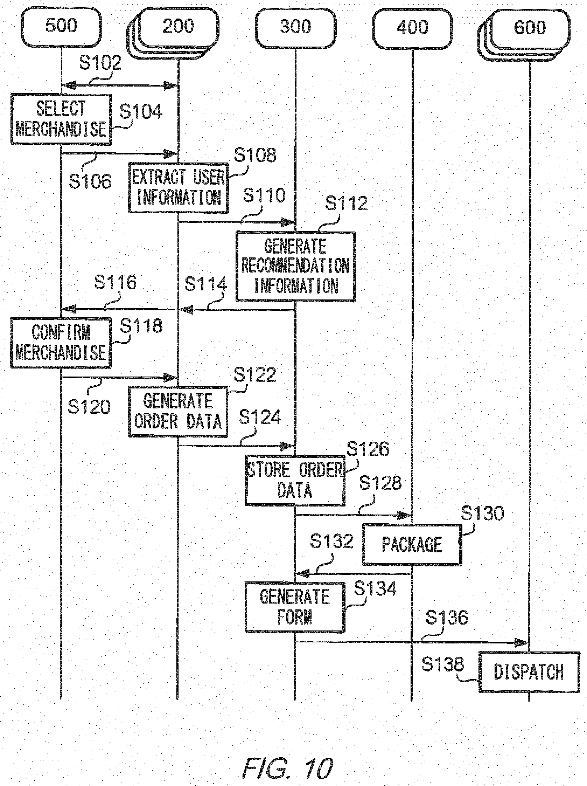

FIG. 10 shows one example of operations of purchase assistance system 100. In advance, a user uses user terminal 500 to perform user registration in EC server 200 (S102). The user accesses EC server 200 and selects merchandise desired for purchase in such ways as utilizing a search function provided by EC server 200, and inputs a delivery destination (S104).

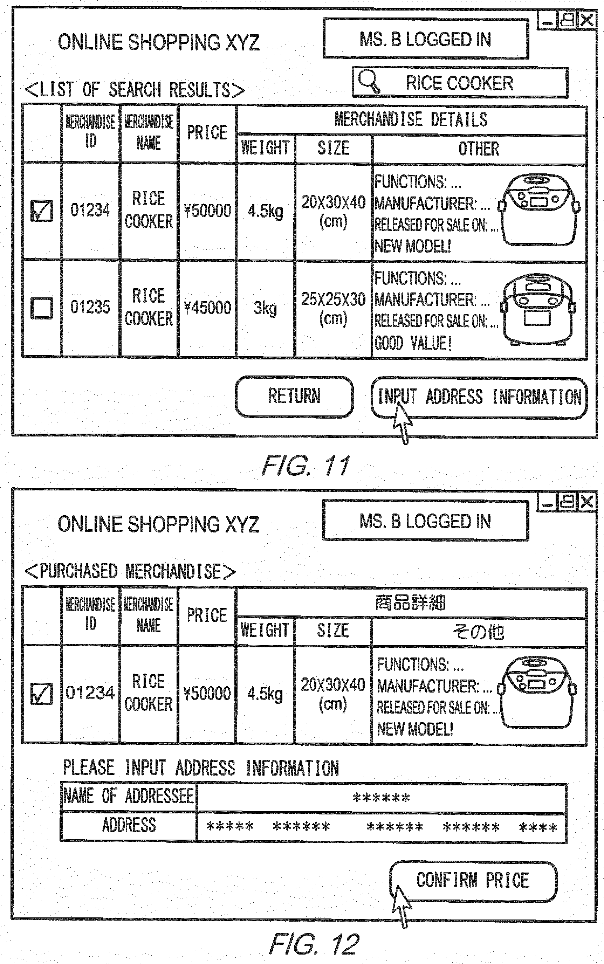

FIG. 11 is one example of the content to be displayed on the screen of user terminal 500 at a time of merchandise selection. Merchandise IDs, merchandise names, prices, and detailed information of the merchandise (weights, sizes, and other information (merchandise features and the like)) are displayed. In FIG. 11, when the user selects merchandise desired for purchase (here, merchandise having the merchandise ID "01234") and selects "input address information," the screen shown in FIG. 12 is displayed. When the user inputs the name and address of the delivery destination in this screen and selects "confirm price," the procedure returns to FIG. 10 and a purchase request including the merchandise ID, the user ID, and address information is sent from user terminal 500 to EC server 200 (S106).

Upon receiving a purchase request, EC server 200 extracts user information (S108) regarding the user from database DB40 and generates provisional order data including the merchandise ID, user ID, address information, and user information, and sends this to purchase assistance server 300 (S110).

Purchase assistance server 300 generates recommendation information based on the provisional order data that is received (S112). The recommendation information that is generated is sent to EC server 200 (S114). EC server 200 generates content based on the recommendation information that is received and sends this to purchase assistance system 100 (S116).

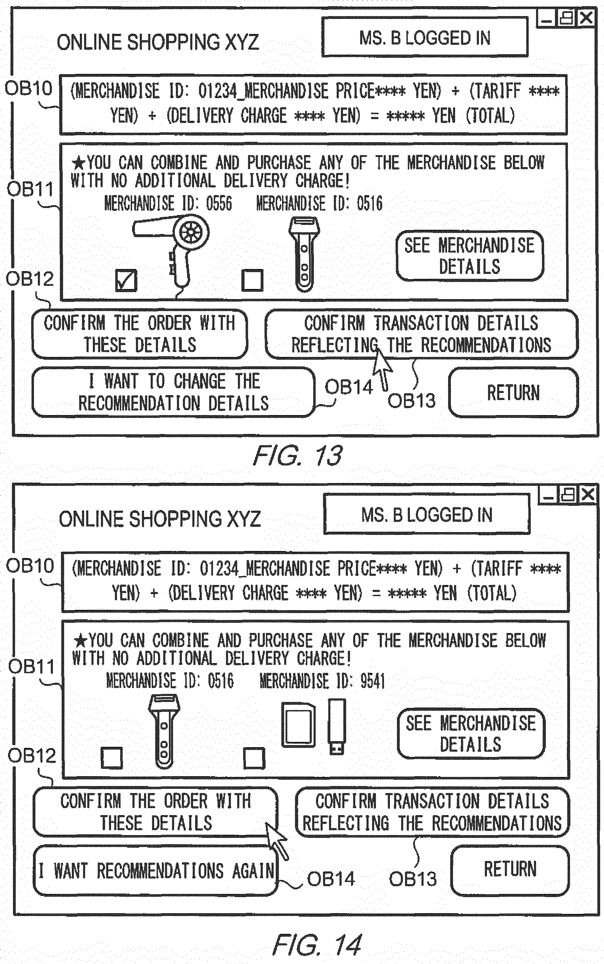

FIG. 13 is one example of the content that is generated based on the recommendation information and is to be displayed on the screen of user terminal 500. In object OB10 is displayed a cost pertaining to the transaction details in which the first user desires purchase, that is, the price of the merchandise "01234," tariffs imposable on this merchandise, delivery charges, and a total amount of these.

Additionally, in object OB11 is displayed information of additional proposed merchandise along with merchandise for which combining and delivering is possible without incurring an additional delivery charge (in this example, "0556' and "0516").

If the user desires to make an additional purchase, he or she checks the relevant merchandise to select object OB13. In a case where it is determined that only the first merchandise ("01234") is to be purchased without any particular merchandise desired for additional purchase by the user, object OB12 is selected. In a case where it is deemed merchandise other than "0556" and "0516" is desired to be confirmed to further investigate merchandise targeted for additional purchase, object OB14 is selected.

When specification of the additional merchandise and specification of object OB13 are carried out, the processing of S104 to S116 is carried out. At this time, content such as that shown in FIG. 14 is displayed on the screen of user terminal 500. In this screen, a total figure of costs necessary for delivering the first merchandise and additional specified merchandise to the specified address is displayed in object OB10, and if generated recommendation information is present in a case where there is still surplus in the weight even after adding the additional specified merchandise, the relevant generated recommendation information is displayed in object OB11.

In a case where object OB14 is selected in FIG. 13, the processing of S104 to S116 is similarly carried out, but only the display details of object OB11 in FIG. 13 generates a different screen. Specifically, in generating recommendation information by receiving provisional order data from EC server 200, purchase assistance server 300 stores the previously generated recommendation information for the provisional order data and extracts from database DB10 merchandise from which merchandise containing recommendation information to be generated is removed, thereby generating new recommendation information.

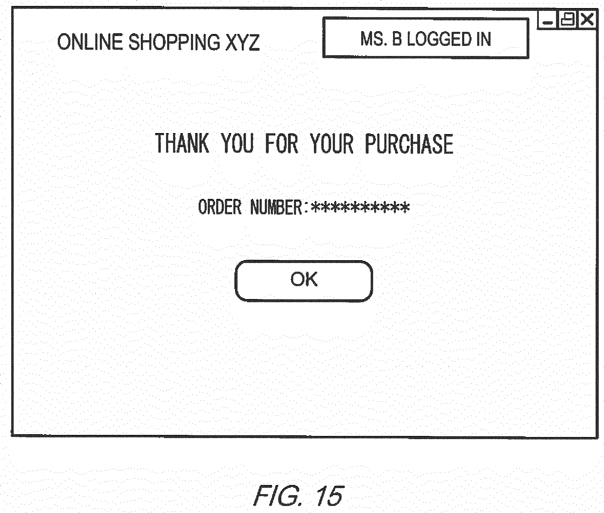

Returning to FIG. 10, when object OB12 is selected at FIG. 13 (S118 in FIG. 10), a purchase request including merchandise ID, user ID, address information, and a flag indicating purchase confirmation is sent from user terminal 500 to EC server 200 (S120). And EC200 generates content indicating the establishment of a transaction as shown in FIG. 15 and sends this to user terminal 500.

Upon receiving the purchase request from user terminal 500, EC server 200 generates order data (S122) and sends this to purchase assistance server 300 (S124). Purchase assistance server 300 registers the order data in database DB30 and sends a shipping instruction (S128) containing the order ID, delivery origin, merchandise ID and packaging size (or an additional packaging method), which is to be included in the order data.

Upon receiving the shipping instruction, warehouse terminal 400 specifies the merchandise targeted for shipping based on the merchandise ID, and performs packaging of the merchandise (S130) so as to fit within the packaging size specified in the shipping instruction. When packaging is completed, warehouse terminal 400 gives notification to purchase assistance server 300 that shipping preparation associated with the order ID has been completed. Upon receiving this notification, purchase assistance server 300 generates delivery form data (S134) based on the order data corresponding to the order ID, and sends this with a delivery request to delivery agent server 600 (S136). Upon receiving the delivery request, delivery agent server 600 starts forwarding operations.

In the foregoing example, the delivery charge system was an illustrative example. It is sufficient for delivery charges to be dependent on at least one of a weight or size (packaged size) of the merchandise. For example, the delivery charges may be configured to be at least either a weight or size associated on a one-to-one basis according to a predetermined computational expression. Here, the definition of size is arbitrary and may be a total value of the length, width, and height of the merchandise or may be a cubic volume of a packaging case.

In the foregoing example, a tariff was given as an example of a tax imposable on merchandise, but the type, details, definition, and appellation of the tax are arbitrary. Taxes that are generally present include tariffs, consumption taxes, increased value taxes (value-added taxes), and import taxes. The taxation system may be different for each nation in which purchasing occurs and for each nation of delivery destination. Furthermore, it is also possible for multiple types of taxes to be imposable in regard to the purchase and distribution of merchandise. And in regard to the determination of items to be taxed, the amount of tax may be determined in response to the price of the merchandise and may also be dependent on the type through to the classification or sort of merchandise (such as discretionary items, luxury items, household products, and foodstuffs and the like). Classifications can be indicated by an HS code for example. Furthermore, in regard to the amount of tax, in addition to this being stipulated as a percentage of the price, this may also be stipulated using an absolute price. Put simply, "tax" here refers to that which is incurred in a case where a transaction is performed across two or more nations (or economic zones) that control the movement of goods, and the amount of tax may be a quantity that is determined uniquely according to at least the merchandise or the movement of the merchandise.

The algorithm for selecting merchandise for additional purchase in information generating unit 311 is not limited to the method shown in FIG. 9. As long as this is proposed so that at least either the required costs for delivering multiple items of merchandise all to a single delivery destination, or a tax amount imposable in accordance with delivery becomes logical. For example, in a case where the delivery agent has set that the cost is cheaper for a group of merchandise to be delivered to be divided into two packages for delivery than for delivery to be carried out using a single package, then the purchase assistance server 300 may include in the recommendation information an item of information indicating that delivery is to be divided into two or more times by dividing two packages for a single delivery destination. In this case, it may also be proposed that each package be delivered by different delivery agents.

Furthermore, purchase assistance server 300 may be configured to incorporate the functionality of EC server 200. In essence, a purchase assistance system according to the present invention is provided with a reception unit that receives purchase instructions from a user terminal, a first storage unit in which is stored merchandise information including at least weights of merchandise, a second storage unit in which is stored information relating to a tax that is imposable on distribution of merchandise, a third storage unit in which is stored a correspondence between weights and delivery charges, and a presentation unit that, upon obtaining merchandise identifying information from the electronic business transaction server, sends to the user terminal identifying information of additional purchase merchandise corresponding to a weight of the merchandise and a tax amount imposable on the merchandise.

In other words, a computer device having one or more processors and a memory may be caused to execute a step of obtaining merchandise identifying information from an electronic business transaction server that receives purchase instructions from a user terminal, a step of referencing a storage unit in which are stored merchandise information including at least a merchandise weight, information relating to taxes imposable on distribution of merchandise and imposable on merchandise, and a correspondence between weight and delivery charges, and determining additional purchase merchandise corresponding to a delivery charge of the merchandise and a tax amount imposable on the merchandise, and a step of providing the identifying information that has been determined to the electronic business transaction server.

## Claims

1. A purchase assistance server, comprising:
a communications unit that carries out communications with an electronic business transaction server, which receives purchase instructions from a user terminal,
a first storage unit in which is stored merchandise information including a weight of each item of merchandise,
a second storage unit in which is stored information relating to a tax that is imposable on distribution of merchandise,
a third storage unit in which is stored a correspondence between weights and delivery charges, and
a provisioning unit that, upon obtaining merchandise identifying information from the electronic business transaction server, provides to the electronic business transaction server via the communications unit identifying information of additional purchase merchandise corresponding to a delivery charge of the merchandise and a tax amount imposable on the merchandise among merchandise stored in the first storage unit.

2. The purchase assistance server according to claim 1, wherein
a single delivery charge is associated with each weight classification of merchandise in the third storage unit, and
the provisioning unit determines the additional purchase merchandise within a range in which an additional delivery charge is not incurred.

3. The purchase assistance server according to claim 1, wherein
a single delivery charge is associated with each weight classification of merchandise in the third storage unit, and
the provisioning unit determines the additional purchase merchandise so that any additional delivery charge incurred is minimized.

4. The purchase assistance server according to any of claims 1 to 3, wherein
the merchandise information further includes a merchandise price,
a single tax rate is associated with each price classification of merchandise in the second storage unit, and
the provisioning unit determines the additional purchase merchandise within a range in which an additional tax is not incurred.

5. The purchase assistance server according to any of claims 2 to 4, wherein
the merchandise information further includes a size of the relevant merchandise, and
a single delivery charge is associated with each classification of packaging size of merchandise in the third storage unit.

6. The purchase assistance server according to any of claims 1 to 5, wherein
a correspondence between weights and delivery charges is stored in the third storage unit in regard to multiple delivery agents, and
the provisioning unit, in addition to the additional purchase merchandise, provides information that identifies one or more delivery agents included in the plurality of delivery agents.

7. A program for executing:
a step of obtaining merchandise identifying information from an electronic business transaction server that receives purchase instructions from a user terminal,
a step of referencing a storage unit in which are stored merchandise information including at least weights of merchandise weight, a tax imposable on merchandise, and a correspondence between weights and delivery charges, and determining additional purchase merchandise corresponding to a delivery charge of the merchandise and a tax amount imposable on the merchandise, and
a step of providing the identifying information that has been determined to the electronic business transaction server.

8. A purchase assistance system, comprising:
a reception unit that receives purchase instructions from a user terminal,
a first storage unit in which is stored merchandise information including at least weights of merchandise,
a second storage unit in which is stored information relating to a tax that is imposable on distribution of merchandise,
a third storage unit in which is stored a correspondence between weights and delivery charges, and
a presentation unit that, upon obtaining merchandise identifying information from the electronic business transaction server, sends to the user terminal identifying information of additional purchase merchandise corresponding to a weight of the merchandise and a tax amount imposable on the merchandise.
